# EUROPÄISCHE PATENTSCHRIFT

(11) **EP 1 179 387 B1**
(45) Veröffentlichungstag und Bekanntmachung des Hinweises auf die Patenterteilung: **28.04.2004**
(21) Anmeldenummer: 01117517.1
(22) Anmeldetag: 20.07.2001
(51) Int. Cl.: B23Q 3/155, B23Q 3/157

(54) **Werkzeugmaschine mit Greifer und/oder Werkzeugmagazinsystem**
Machine tool provided with a gripper and/or tool magazine system
Machine outil pourvu d'une pince d'outillage et/ou d'un système de magasin d'outil

(30) Priorität: 08.08.2000 DE 10039525
(43) Veröffentlichungstag der Anmeldung: 13.02.2002
(73) Patentinhaber: GROB-Werke Dr. h.c. mult. Dipl.-Ing. Burkhart Grob e.K., 87719 Mindelheim (DE)
(72) Erfinder: Müller, Hans-Dieter, 87742 Dirlewang (DE)
(74) Vertreter: Pfister, Helmut, Dipl.-Ing.

(56) Entgegenhaltungen:
- EP-A- 0 355 271
- EP-A- 0 585 471
- EP-A- 0 623 419
- DE-A- 3 440 604
- US-A- 4 238 034
- US-A- 4 827 599
- US-A- 5 372 568
- US-A- 5 383 832
- PATENT ABSTRACTS OF JAPAN vol. 2000, no. 15, 6. April 2001 (2001-04-06) & JP 2000 343367 A (MORI MACHINERY CORP), 12. Dezember 2000 (2000-12-12)
- PATENT ABSTRACTS OF JAPAN vol. 2000, no. 08, 6. Oktober 2000 (2000-10-06) & JP 2000 141155 A (TOSHIBA MACH CO LTD), 23. Mai 2000 (2000-05-23)
- PATENT ABSTRACTS OF JAPAN vol. 1997, no. 02, 28. Februar 1997 (1997-02-28) & JP 08 257862 A (OKUMA MACH WORKS LTD), 8. Oktober 1996 (1996-10-08)

## Beschreibung

Die Erfindung betrifft einen Greifer für das Transportieren und/oder Übergeben, insbesondere für den Transport eines Werkzeuges, welcher aus einem Werkzeugmagazin Werkzeuge ergreift, an eine Bearbeitungsspindel, zum Beispiel eines Bearbeitungszentrums oder einer Werkzeugmaschine führt und an die Spindel übergibt sowie ein Werkzeugmagazinsystem.

Vorgenannte Werkzeugmagazinsysteme sind wohlbekannt. Sie dienen dazu in Werkzeugmaschinen, wie zum Beispiel Bearbeitungszentren, Fräsmaschinen oder Drehmaschinen und so weiter, insbesondere für die metallverarbeitende Industrie, entsprechend den vorgegebenen Bearbeitungsschritten in der Werkzeugspindel in kurzer Folge die unterschiedlichsten Werkzeuge zur Verfügung zu stellen. In der Regel handelt es sich bei den Werkzeugen um spanabhebende Werkzeuge, wie zum Beispiel Bohrer oder Fräser und dergleichen. Es ist aber durchaus möglich, anstelle einer Bearbeitungsspindel einen Bearbeitungskopf vorzusehen, der gegebenenfalls auch eine Werkzeugspindel aufweist.

Bei der Lösung im Stand der Technik ist es von Nachteil, daß die Anordnung des Werkzeugsmagazins, in welchem mehrere hundert unterschiedlichste Werkzeuge gelagert sind, sehr platzraubend ist. Die bekannten Systeme ergreifen die Werkzeuge von oben, weswegen eine flächige Anordnung der Werkzeuge nebeneinander notwendig ist. Gleichzeitig benötigt das Handhabungsgerät, welches den Greifer manipuliert, entsprechend Platz, was zu sehr großen Anlagen führt.

Aus der Druckschrift US 4,238,034 ist ein automatisches Werkzeugwechselsystem bekannt, welches Werkzeuge aus einem Werkzeugmagazin entnimmt und zu einer Werkzeugspindel beispielsweise führt. Das Wechseln ist dabei äußerst kompliziert und erfordert eine Vielzahl von Arbeitsschritten, um den Werkzeugwechsel durchführen zu können. Insbesondere muß dabei die Achse des Werkzeugwechslers an wenigstens zwei Achsen bewegbar sein. Ein gleichzeitiges Ergreifen eines Werkzeuges mit zwei Greifern an unterschiedlichen Anlageflächen, ist nach dieser Druckschrift nicht gegeben. Entsprechend dieser Druckschrift ist ein Werkzeugmagazin für eine Bearbeitungsspindel oder einen Bearbeitungskopf mit einem Greifer offenbart, welcher aus einem Werkzeugmagazin Werkzeuge ergreift, an eine Bearbeitungsspindel, zum Beispiel ein Bearbeitungszentrum oder eine Werkzeugmaschine, führt, und an die Spindel oder den Kopf übergibt, wobei der Greifer bezüglich der Rotationsachse beziehungsweise der Längsachse des Werkzeuges seitlich, insbesondere im Wesentlichen rechtwinklig zu dieser Achse an das Werkzeug herangeführt wird und dieses ergreift. Aus dieser Druckschrift ist auch ein Greifer für das Greifen, Transportieren und/oder Übergeben eines Werkzeuges, insbesondere für den Transport eines Werkzeuges aus einem Werkzeugmagazin zu einer Arbeitsspindel bekannt, wobei das Werkzeug insbesondere einen Schaft aufweist und an der Mantelfläche des Schaftes oder des Werkzeuges eine Rille, Vertiefung, ein Absatz oder dergleichen vorgesehen ist, mit welchem ein erstes Teil des Greifers zusammenwirkt. Insbesondere die Übergabe des Werkzeuges beziehungsweise der Werkzeugspindel gestaltet sich nach der in der Druckschrift US 4,238,034 vorgeschlagenen Lösung recht kompliziert. Insbesondere ist die Übergabe beziehungsweise Übernahme an andere Greifer technisch recht aufwendig.

Aus der Druckschrift US 4,827,599 ist ein Greifer für das Greifen, Transportieren und/oder Übergeben eines Werkzeuges, insbesondere für den Transport eines Werkzeuges aus einem Werkzeugmagazin zu einer Arbeitsspindel bekannt, wobei das Werkzeug ebenfalls insbesondere einen Schaft aufweist, und an der Mantelfläche des Schaftes oder des Werkzeuges eine Rille, Vertiefung ein Absatz oder dergleichen vorgesehen ist, mit welchem ein erstes Teil des Greifers zusammenwirkt, wobei ein zweites Teil des Greifers vorgesehen ist, das mit einem anderen Bereich des Schaftes oder des Werkzeuges zusammenwirkt, derart, daß das zweite Teil des Greifers an der Schaftmantelfläche oder am Werkzeugaußendurchmesser anliegt. Ein behinderungsfreies Angreifen eines Greifers nach der US 4,827,599 an unterschiedlichen Schaftebenen, ist dieser Druckschrift nicht zu entnehmen.

Die Erfindung hat es sich daher zur Aufgabe gemacht, einen Greifer für das Greifen, das Transportieren und/oder die Übergabe eines Werkzeuges, insbesondere für den Transport eines Werkzeuges aus einem Werkzeugmagazin zu einer Arbeitsspindel vorzuschlagen, welcher ein kollisionsfreies Angreifen an unterschiedlichen Schaftebenen ein und desgleichen Werkzeuges beziehungsweise Werkzeugschaftes ermöglicht.

Die Erfindung geht von der zuvor beschriebenen Aufgabenstellung und dem dazu bekannten Stand der Technik aus und schlägt einen Greifer für das Greifen, Transportieren und/oder das Übergeben eines Werkzeuges, insbesondere für den Transport eines Werkzeuges aus einem Werkzeugmagazin zu einer Arbeitsspindel vor, wobei das Werkzeug insbesondere einen Schaft aufweist und an der Mantelfläche des Schaftes oder des Werkzeuges eine Rille, Vertiefung, ein Absatz oder dergleichen vorgesehen ist, mit welchem ein erstes Teil des Greifers zusammenwirkt, wobei ein zweites Teil des Greifers vorgesehen ist, das mit einem anderen, nebenliegenden Bereich des Schaftes oder des Werkzeuges zusammenwirkt, derart, daß das zweite Teil des Greifers an der Schaftmantelfläche oder am Werkzeugaußendurchmesser anliegt, und wobei das erste Teil und das zweite Teil des Greifers in unterschiedlichen Wirkebenen angeordnet sind und wobei das erste Teil und das zweite Teil relativ zueinander beweglich sind, insbesondere zueinander linear beweglich oder verschwenkbar, welcher sich dadurch auszeichnet, daß das erste Teil und das zweite Teil des Greifers derart ausgebildet sind, daß sie bei beidseitig verdrehter Anordnung von Greifern am Werkzeugschaft kollisionsfrei anordenbar sind.

Entsprechend einer vorteilhaften Weiterbildung des erfindungsgemäßen Greifers ist es vorgesehen, daß das zweite Teil aus mindestens zwei Elementen besteht, die klauenartig oder zangenartig zusammenwirken.

Durch diese erfindungsgemäße Ausgestaltung wird erreicht, daß es möglich ist, Werkzeuge im Wesentlichen in Längsachse, im Falle eines Regals senkrecht übereinander anzuordnen und trotzdem ein sicheres Ergreifen und einen sicheren Transport des Werkzeuges zuzulassen. Da es prinzipiell möglich ist, mehrere Werkzeuge übereinander zu lagern, ist die Ausbildung des Werkzeugmagazines als Regal problemlos möglich, wodurch der Flächenbedarf deutlich gesenkt werden kann.

Dabei ist die Erfindung auf die Anordnung der Werkzeuge in Längsachse, zum Beispiel vertikal übereinander, in keinster Weise beschränkt. Es ist in gleicher Weise auch möglich, die Erfindung in bestehenden Werkzeugmagazinen einzusetzen, bei welchen die Werkzeuge zum Beispiel flächig oder abgestuft nebeneinander versetzt angeordnet sind. Das erfindungsgemäße Werkzeugmagazinsystem erlaubt auch die Aufnahme von liegend gelagerten Werkzeugen, also von Werkzeugen, deren Längsachse im Wesentlichen horizontal orientiert ist.

Erfindungsgemäß wird vorgeschlagen, daß der Greifer bezüglich der Längs-/Rotationsachse des Werkzeuges seitlich an das Werkzeug heranfährt. Im Stand der Technik war eine Bewegung im Wesentlichen in Längs- oder Rotationsachse vorgesehen (in der Regel senkrecht von oben), da die Greifvorrichtung das Werkzeug beziehungsweise den Werkzeugschaft in axialer Richtung ergriff. Um diese verschiedenen komplexen Bewegungen des Greifers zu ermöglichen, ist der Greifer auf einem Handhabungsgerät angeordnet und mehrachsig bewegt gelagert. Es handelt sich hier zum Beispiel um ein Fünf- oder Sechsachssystem, wobei drei Translationsachsen und zwei, drei oder noch mehr Rotationsachsen für den Greifer vorgesehen sind.

In einer bevorzugten Ausgestaltung der Erfindung ist vorgesehen, daß unter dem Werkzeugmagazin eine Tropfwanne zum Auffangen von verschleppter Kühlflüssigkeit vorgesehen ist und die Tropfwanne mit dem Kühlflüssigkeitskreislauf verbunden ist. Das Werkzeug wird beim Arbeitseinsatz mit Kühlflüssigkeit besprüht, was zum einen die Werkzeugtemperatur senken soll und zum anderen auch die abgelösten Späne wegschwemmen soll. Die Kühlflüssigkeit befindet sich in einem Kreislauf, wobei die Kühlflüssigkeit nach Reinigung beziehungsweise Abfiltern der abgeschwemmten Teile durch ein Pumpensystem an das Werkzeug beziehungsweise das Werkstück herangefördert und mit hohem Druck auf das Werkzeug beziehungsweise Werkstück gespritzt wird. Das tropfnasse Werkzeug wird nach Beendigung des jeweiligen Arbeitsschrittes vom Greifer aus der Arbeitsspindel beziehungsweise dem Bearbeitungskopf entnommen und in das Magazin zurücktransportiert. Hierbei wird die anhaftende Kühlflüssigkeit ebenfalls in das Werkzeugmagazin verschleppt. Diese tropft dann in der Pausenzeit des Werkzeuges an diesem herab und wird durch die erfindungsgemäß vorgeschlagene Tropfwanne aufgefangen, welche die gesammelte Flüssigkeit dem Kühlflüssigkeitskreislauf wieder zuführt.

Um zu vermeiden, daß unter dem tropfenden Werkzeug sämtliche anderen Werkzeuge mit der mit Abriebspänen und so weiter versetzten Kühlflüssigkeit verschmutzt werden, ist in der Lagervorrichtung für die Werkzeuge ein Tropfblech vorgesehen, derart, daß das darunterliegende Werkzeug im Sinne eines Regenvordaches vor dieser Flüssigkeit geschützt ist.

Des Weiteren betrifft die Erfindung einen Greifer für das Greifen, Transportieren und/oder Übergeben eines Werkzeuges, insbesondere für den Transport eines Werkzeuges aus einem Werkzeugmagazin zu einer Arbeitsspindel, wobei das Werkzeug insbesondere einen Schaft aufweist, und an der Mantelfläche des Schaftes oder des Werkzeuges eine Rille, Vertiefung oder ein Absatz vorgesehen ist, mit welchem ein erster Teil des Greifers zusammenwirkt und ein zweiter Teil des Greifers mit einem anderen Bereich des Schaftes oder des Werkzeuges zusammenwirkt.

Wie auch für die erfindungsgemäße Ausgestaltung des Werkzeugmagazinsystemes wird in gleicher Weise ein verbesserter Greifer vorgeschlagen, der es erlaubt, daß das Werkzeug im Wesentlichen rechtwinklig oder seitlich bezüglich seiner bevorzugten Achse ergriffen wird. Für das Ergreifen von Werkzeugen sind dabei im Wesentlichen zwei unterschiedliche, konkurrierende Systeme bekannt. Es handelt sich zum einen um ein sogenanntes Klappensystem, bei welchem zwei Elemente axial oder mit einem spitzen Winkel zu dieser Achse bewegt werden und die Klappen so ausgebildet sind, daß sie sich an den Absätzen und Schäften beziehungsweise Nuten oder Rillen des Werkzeuges haltend eingreifen. Ein anderes Prinzip funktioniert wie eine Zange, das heißt, es wird das Werkzeug axial ergriffen. Bei der Lösung im Stand der Technik werden aber regelmäßig spezielle Hinterschneidungen, Absätze und so weiter am Werkzeug beziehungsweise am werkzeugschaft ausgenützt, um das Werkzeug zu halten. Oftmals wird es auch gewünscht, daß das Werkzeug von einem Greifer an einen anderen Greifer übergeben wird, zum Beispiel daß ein erster Greifer das Werkzeuge aus dem Magazin entnimmt und ein zweiter Greifer den Einsatz des Werkzeuges in den Arbeitskopf/-spindel übernehmen soll. Hierzu sind die bekannten Prinzipien nicht geeignet, da diese in der Regel nur einseitig ausgebildet sind, also nur an einer Seite des Werkzeuges ein Ergreifen durch den Greifer erlauben.

Die nunmehr vorgeschlagene, erfindungsgemäße Ausgestaltung des Greifers erlaubt daher auch ein anderes Greifsystem, nämlich, entsprechend der Bewegung des Greifers, seitlich oder rechtwinklig zum Werkzeug, an dieses heran. Hierzu wird vorgeschlagen, daß der zweite Teil des Greifers an der Schaftmantelfläche oder am Werkzeugaußendurchmesser anliegt. Die Ausbildung des zweiten Teiles ist jeweils so getroffen, daß nicht auf ein Halten auf Absätzen und Axialnuten und so weiter zurückgegriffen werden muß, wie es im Stand der Technik notwendig war. Vielmehr wird der zweite Teil so an der Schaftmantelfläche oder Werkzeugaußendurchmesser positioniert, daß das Werkzeug bezüglich des Greifers radial geführt und festgelegt ist. Die axiale Führung wird dabei durch das erste Teil erbracht, welches mit einer entsprechenden Nase, einem Vorsprung oder auch einer Vertiefung, Rille und dergleichen am Werkzeug zusammenwirkt.

Es wurde angedeutet, daß an dem Werkzeug ein Werkzeugschaft vorgesehen ist, dessen Außenkontur beziehungsweise Außendurchmesser deutlich größer ist als der Durchmesser des Werkzeuges. Die Erfindung ist aber auf eine solche Ausgestaltung nicht beschränkt, sondern ist in gleicher Weise auch an einem Werkzeug ohne einen Werkzeugschaft einsetzbar, wobei dann anstelle des Werkzeugschaftmantels der Werkzeugmantel die entsprechenden Funktionalitäten übernimmt. Gleiches gilt auch für Werkzeugtypen deren Schaft gegenüber den wirksamen Werkzeugbereichen zurückgesetzt ist.

Die Verwendung des Schaftes hat aber insbesondere bei der automatischen Bearbeitung von Werkstücken eine Aufgabe, er definiert aufgrund von Anlageflächen die genaue Position des Werkzeuges in Längsrichtung wie auch bezüglich des Durchmessers für entsprechend exakte Bearbeitungen. Hierzu ist insbesondere rechtwinklig zur Längsachse eine Planfläche am Schaft vorgesehen, die als Funktionalfläche bezeichnet wird und hochgenau bearbeitet ist. Bekannte Greifprinzipien haben insbesondere die Funktionalfläche zum Halten des Werkzeuges mit einbezogen. Ein solches Prinzip ist nachteilig, da zum einen aufgrund der Haltekräfte die Funktionalfläche beschädigt werden kann. Des Weiteren können unter dem greifenden Teil an der Planfläche Späne und so weiter hängenbleiben, die auch bei einem oftmals nachfolgend vorgesehenen Abblasschritt bei der Ein- oder Auslagerung des Werkzeuges in das Magazin nicht von dem Werkzeug entfernt werden. Es kann daher trotz dem geplanten Reinigungsschritt passieren, daß Späne auf den hochgenauen Anlageflächen, zum Beispiel bei einem Steilkegel oder einem HSK-Schaft, verbleiben und dann diese Späne in die Werkzeugaufnahme an der Arbeitsspindel transportiert werden und dort zu Maßungenauigkeiten führen. Quasi als Nebeneffekt wird aber durch die erfindungsgemäße Lösung erreicht, daß auf den Einbezug der Funktionalflächen für das Halten des Werkzeuges nicht mehr zurückgegriffen werden muß, sondern daß diese Flächen frei bleiben und durch Druckluft oder Spülflüssigkeit und so weiter optimal gereinigt werden können.

Ein weiterer Vorteil der Ausgestaltung des Greifers liegt darin, daß diser verhältnismäßig platzsparend ausgebildet ist, da das erste Teil zum Beispiel in die Rille des Werkzeuges eingreift und das zweite Teil daneben an der Schaftmantelfläche anliegt. Spiegelt man dieses Prinzip an einer zur Längsachse rechtwinkligen Achse oder Ebene, so kann ein so angeordneter Greifer ebenfalls in die Rille und in einen anderen Schaftbereich ergreifen. Es ist durch dieses Prinzip also auch prinzipiell möglich, daß zwei Greifer gleichzeitig das Werkzeug ergreifen. Dies ist aber die Grundvoraussetzung für ein Umgreifsystem, welches aus zwei Greifern besteht.

Die erfindungsgemäße Ausgestaltung des Greifers vereinigt also drei Vorzüge in sich, zum einen erlaubt es eine platzsparende Anordnung der Werkzeuge in einem Werkzeugregal, es erlaubt ohne Verwendung eines zusätzlichen Umgreifelementes das Umgreifen des Werkstückes unmittelbar und die Ausgestaltung des Greifers ist so gewählt, daß die Funktionalflächen zum Halten nicht benötigt werden, also auch beim Einsetzen des Werkzeuges in die Arbeitsspindel nicht stören beziehungsweise die Flächen für Reinigungen zugänglich sind.

In einer bevorzugten Ausgestaltung der Erfindung ist vorgesehen, daß das erste Teil und das zweite Teil relativ zueinander beweglich ist, diese insbesondere zueinander linear beweglich oder verschwenkbar sind. Die vorgeschlagene Beweglichkeit erlaubt ein Ergreifen des Werkzeuges, wobei die Realtivbeweglichkeit durch drei verschiedene Prinzipien realisiert werden kann, nämlich nur durch eine Bewegung des ersten oder zweiten Teiles oder eine Bewegung beider Teile. Je nach Lagerung und nach Wahl des Antriebes ist es dabei von Vorteil, daß das erste und das zweite Teil entweder zueinander linear beweglich sind, oder aber zueinander verschwenkt werden, wenn zum Beispiel ein Teil gelenkig gelagert ist.

In einer bevorzugten Ausgestaltung der Erfindung ist vorgesehen, daß das erste Teil relativ am Greifer stillstehend und das zweite Teil hierzu beweglich ausgebildet ist. Das erste Teil ist dabei bevorzugt mit einer federartigen Anlagefläche ausgebildet, die in eine Umfangsrille des Schaftes eingreift, das zweite Teil, welches die radiale Festlegung des Werkzeuges übernimmt (bei axialer Festlegung durch das erste Teil), ist hierzu beweglich ausgebildet.

In gleicher Weise ist es natürlich möglich, daß die Kinematiken entsprechend ausgetauscht werden.

Die Erfindung bezieht sich auch auf eine Werkzeugmaschine die entweder mit einem Greifer, einem Werkzeugmagazinsystem oder einem Umgreifsystem, wie beschrieben, ausgestattet ist. Eine solche Werkzeugmaschine dient insbesondere für die spanabhebende Bearbeitung von Werkstücken, es ist aber auch möglich, die Werkzeugmaschine für andere Zwecke einzusetzen, zum Beispiel dieses Prinzip auch für Montagemaschinen zu verwenden, bei welchen entsprechende Montagewerkzeuge mit Hilfe der Erfindung in den Arbeitskopf eingelagert werden.

In der Zeichnung ist die Erfindung schematisch dargestellt. Es zeigen:
- Fig. 1, 2: in einer perspektivischen Darstellung (Fig. 1) und in einer Seitenansicht (Fig. 2) das erfindungsgemäße Werkzeugmagazinsystem,
- Fig. 3: in einer perspektivischen Darstellung zwei erfindungsgemäße Greifer in dem ebenfalls erfindungsgemäßen Umgreifsystem,
- Fig. 4: in einer Draufsicht ein Detail des erfindungsgemäßen Greifers und
- Fig. 5a, 5b: in einer Seitenansicht (Fig. 5a) beziehungsweise Draufsicht (Fig. 5b) zwei verschiedene Ausgestaltungen des Prinzipes des erfindungsgemäßen Greifers.

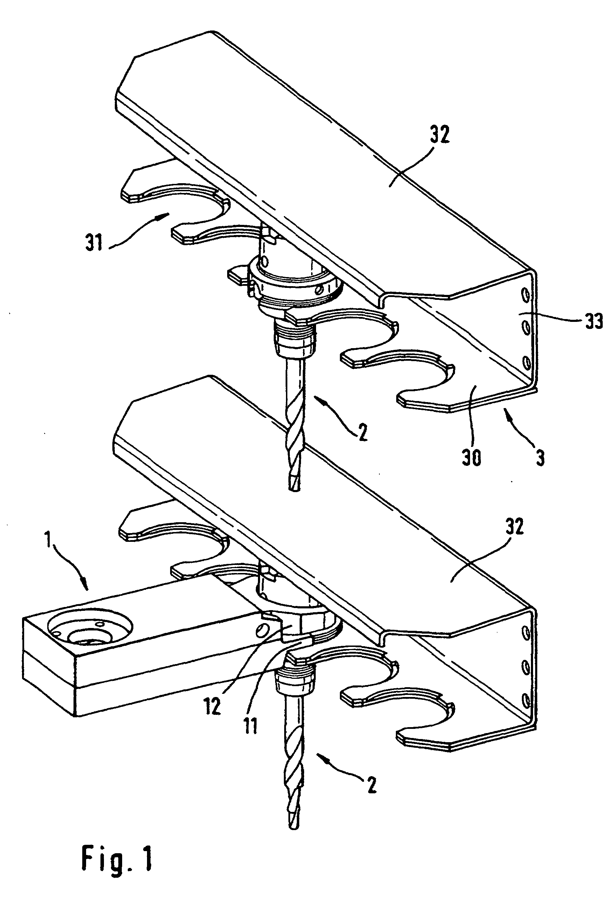

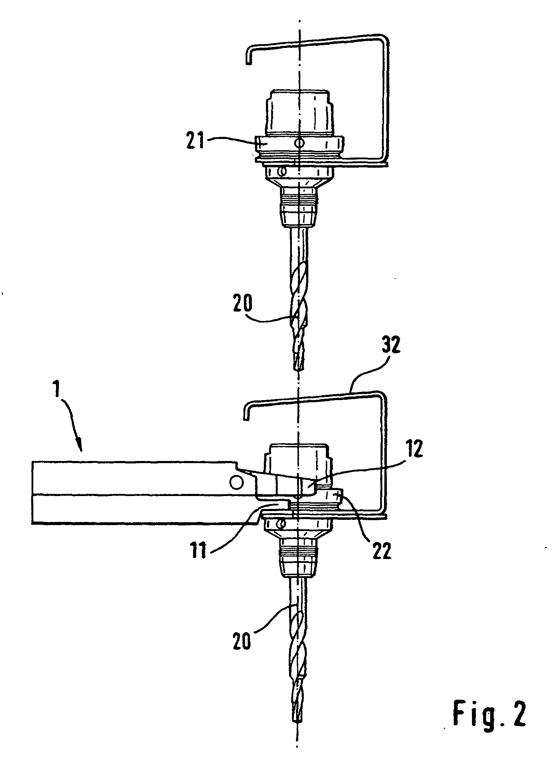

In Fig. 1, 2 ist das erfindungsgemäße Werkzeugmagazinsystem schematisch dargestellt. In einem Werkzeugmagazin 3 sind die Werkzeuge 2 gelagert und werden durch einen Greifer 1 bei Bedarf ergriffen. Das Werkzeugmagazin 3 besteht dabei zum Beispiel aus einem Werkzeugregal mit mehreren Regalböden 30 übereinander. Die Regalböden 30 weisen hierbei einen senkrechten Rücken 33 auf, an dem die Böden an einer nicht weiter dargestellte Trägerwand oder Trägerrahmen oder dergleichen befestigbar sind. Der im Wesentlichen rechtwinklig zum Rücken 33 vorstehende Werkzeugträger 34 weist an seiner vorderen, dem Rücken abgewandten Seite, Ausnehmungen 31 auf, die dem Außendurchmesser des aufzunehmenden Werkzeuges beziehungsweise Werkzeugschaftes 21 entsprechen und die Lagervorrichtung 31 bilden. In dem Werkzeugträger 34 sind im Bereich der Ausnehmungen entsprechende Absätze hierfür angeformt.

Über dem Werkzeug 2 ist ein Tropfblech 32 angeordnet um zu vermeiden, daß von einem noch nassen Werkzeug 2, welches eingeliefert wird, Kühlflüssigkeit auf ein darunterliegendes Werkzeug heruntertropft und dieses insbesondere an den sensitiven Funktionalflächen oder Aufnahmeflächen (HSK-Schaft oder Steilkegelschaft) verschmutzt.

Durch die erfindungsgemäße Ausgestaltung wird erreicht, daß die Regalböden 30 im Wesentlichen übereinander angeordnet sind und daher das gesamte Werkzeugmagazinsystem verhältnismäßig flächensparend realisierbar ist.

In Fig. 1, 2, unteres Werkzeugmagazin 3, ist der Einsatz des erfindungsgemäßen Greifers gezeigt. Bezüglich der Längsachse beziehungsweise Rotationsachse 20 wird der Greifer 1 rechtwinklig an das Werkzeug 2 herangeführt. Der Greifer 1 wird durch ein nicht weiter dargestelltes Handhabungsgerät entlang aller Raumachsen und bezüglich einer Mehrzahl von Drehachsen geführt/bewegt und weist zwei Teile 11 und 12 auf.

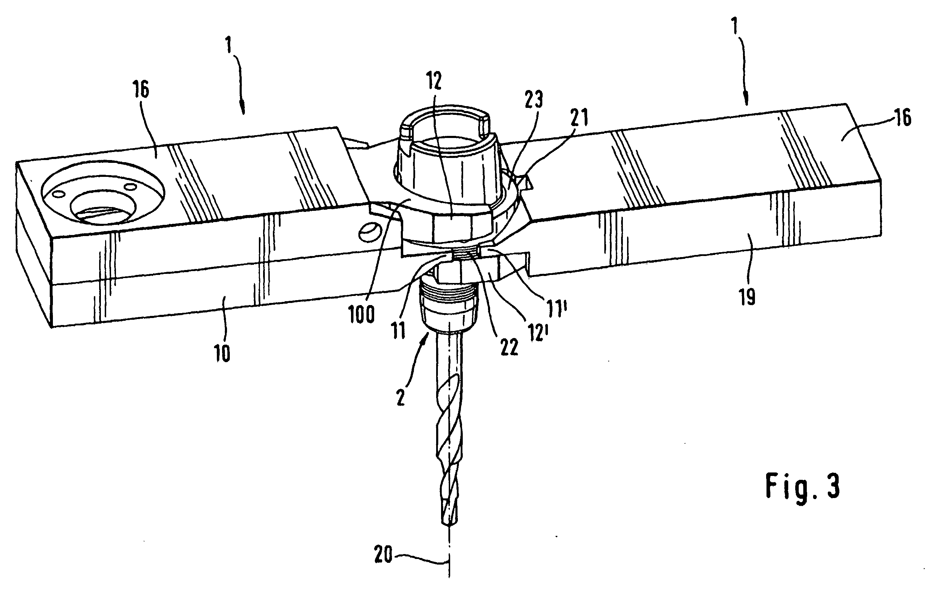

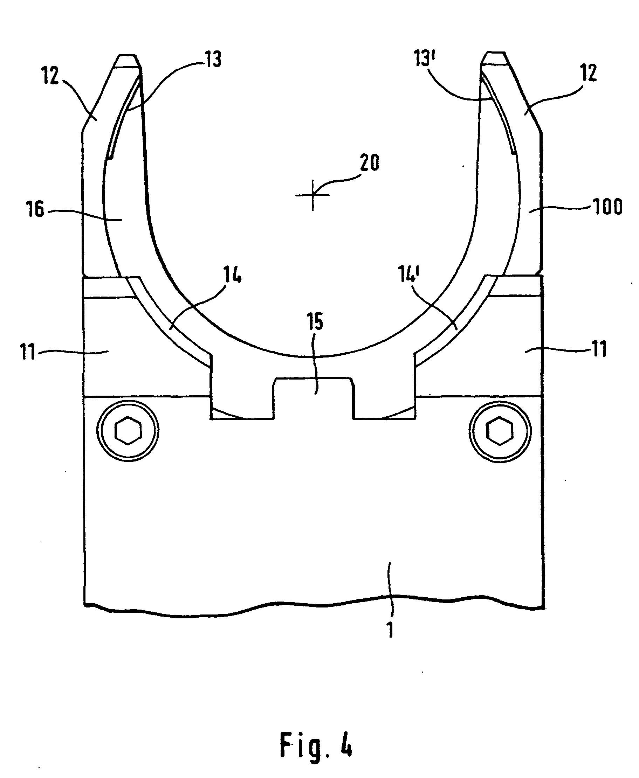

Die genaue Ausgestaltung des Greifers 1 ergibt sich insbesondere aus Fig. 3 und 4.

In Fig. 3 ist insbesondere das Umgreifen des Werkzeuges 2 mit zwei im Wesentlichen identisch ausgebildeten Greifern 10, 19 gezeigt. zunächst soll aber auf das Ergreifen des Werkzeuges 2 durch den Greifer 1 im einzelnen eingegangen werden.

Der Greifer 1, 10 besteht, wie bereits geschildet, aus einem Greifarm 16, der an seinem vorderen Ende zwei Teile, nämlich ein erstes Teil 11 und ein zweites Teil 12 aufweist. Die zwei Teile 11 und 12 wirken derart zusammen, daß das Werkzeug 2 sicher gehalten wird.

In dem hier dargestellten Ausführungsbeispiel ist das zweite Teil 12 um eine rechtwinklig zur Längsachse 20 orientierte, üblicherweise horizontal angeordnete Schwenkachse schwenkbar, also beweglich gelagert, wohingegen das erste Teil 11 am Greifarm 16 feststehend ausgebildet ist. Das erste Teil 11 weist mindestens eine Anlagefläche 14, 14' auf (Fig. 4). Diese Anlagefläche 14 ist federartig, prismatisch ausgebildet und entspricht in ihrer Kontur der Ausformung der Umfangsrille 22 an dem Werkzeugschaft 21 beziehungsweise dem Werkzeug 2. Diese Umfangsrille 22 ist im Bereich der Ausgestaltung der Werkzeuge, gerade für spanabhebende Werkzeuge weit verbreitet und als Standard üblich. Durch das Eintauchen der Anlagefläche 14 in die Rille 22 wird das Werkzeug im Hinblick auf den Greifer 1 axial zur Längsachse 20 festgelegt. Es verbleibt somit noch eine Bewegung in der radialen Ebene, diese Freiheitsgrade werden durch das Zusammenwirken des zweiten Teiles 12 mit dem Werkzeug 2 eliminiert. An dem zweiten Teil 12 sind hierzu zwei Anlageflächen 13, 13' vorgesehen, wobei sich das Werkzeug im Greifer zwischen diesen Anlageflächen befindet und gegebenenfalls auch klemmend gehalten ist.

Hierbei ist es von Vorteil, daß der Schaft 21, an welchem das zweite Teil anliegt, einen größeren Durchmesser oder Außenabmessungen aufweist, wie der Rest des Werkzeuges 2, um bei der klauenartigen Ausgestaltung des zweiten Teiles 12 sicherzustellen, daß die Klaue über den Halbdurchmesser des Werkzeugschaftes 21 greift. Dabei wird das zweite Teil 12 im Bereich des schmäleren Durchmessers über die Werkzeugachse bewegt und dann in einer Bewegungskomponente in Richtung der Längsachse des Werkzeuges auf den Schaft geschwenkt. Als Halbdurchmesser wird hierbei die Strecke beschrieben, die überwunden werden muß, um die äußeren Bereiche des klauenartigen Teiles 12 hinter den maximalen Außendurchmesser des Schaftes/des Werkzeuges zu positionieren. Um dies zu erreichen ist ein zum Beispiel zylindrischer Werkzeugschaft mindestens dem Halbdurchmesser entsprechend in eine entsprechende Aufnahme hineinzubewegen, um ein Hintergreifen des Zylinders in der Klaue zu ermöglichen.

Das Zusammenwirken der Anlageflächen 13, 13' des zweiten Teiles 12 ist insbesondere in Fig. 4 gezeigt, welches eine Unteransicht des erfindungsgemäßen Greifers 1 darstellt. In einer Klappbewegung wird das zweite Teil 12 beim Ergreifen des Werkzeuges in Richtung auf den ersten Teil 11 bewegt und so das Werkzeug 2 axial und radial im Greifer festgelegt. Die Anlageflächen 13, 13' befinden sich dabei in einem Umfangsabstand von weniger als 180° auf der der Klauenöffnung zugewandten Seite des Teiles 12, um im Zusammenwirken mit der Anschlagfläche 14 des ersten Teiles 11 die beiden verbliebenen Freiheitsgrade der flächigen Bewegungsmöglichkeit in radialer Beweglichkeit zu eliminieren.

In der in Fig. 3 beziehungsweise 4 dargestellten Ausgestaltung ist auf dem zweiten Teil 12 eine Abdeckung 100 vorgesehen, die aber auf ihrer Unterseite mit dem Werkzeug nicht zwingend in Berührung zu kommen hat um den Halteeffekt zu erreichen. Auf die Abdeckung 100 kann auch verzichtet werden.

Es ist dabei ein großer Vorteil der Erfindung, daß das Ergreifen des Werkzeuges 2 radial bezüglich der Längsachse 20 erfolgt. Für das Festhalten des Werkzeuges 2 sind dabei die Ausnutzung von Absätzen, Längsnuten und so weiter, die bei dem Werkzeugschaft 21 sonst auch vorgesehen sind, nicht notwendig. Insbesondere werden die Funktionalflächen 23, die eine genaue Lage und Positionierung des Werkzeuges 2 in der Arbeitsspindel beziehungsweise bezüglich des Werkstückes definieren, für das Greifen nicht benötigt, wodurch diese Flächen während des Transportes frei sind um zum Beispiel gereinigt zu werden.

Hierfür ist auch vorgesehen, daß zwischen der Abdeckung 100 und der Funktionalfläche 23 ein Spalt besteht, das heißt, die Innenfläche der Abdeckung 100 nicht direkt auf der Funktionalfläche 23 aufliegt.

Durch diese Ausgestaltung wird erreicht, daß die Funktionalfläche nicht beschädigt wird und auch jederzeit gereinigt werden kann.

In Fig. 4 ist gezeigt, daß zwei Anlageflächen 14, 14' an dem ersten, hier feststehend ausgebildeten ersten Teil 11 angeordnet sind, die in einem Umfangsabstand von ca. 60° bis 90° sich auf einem Umfangswinkel von ca. 30° erstreckt. Dadurch wird eine sicher Lagerung des Werkzeuges- 2 erreicht. Für eine radiale Ausrichtung oder Lagesicherung ist an dem ersten Teil 11 auch eine Lagesicherung 15 zum Beispiel in Form eines Nutsteines vorgesehen, der in eine entsprechende Ausnehmung an dem Werkzeug eingreift.

Die Anlageflächen 13, 13' an dem zweiten Teil 12 sind in der Regel exakt bearbeitet und erlauben eine formschlüssige, klemmende Anlage des vorderen Bereiches des zweiten Teiles 12 an dem Werkzeugschaft 21. Die Anlagefläche 13, 13' erstreckt sich hierbei auch ca. über einen angulären Bereich von ca. 15° bis 30°. Alternativ braucht hier keine Klemmung vorgesehen werden, sondern es reicht unter Umständen auch eine im Wesentlichen spielfreie Anlage aus.

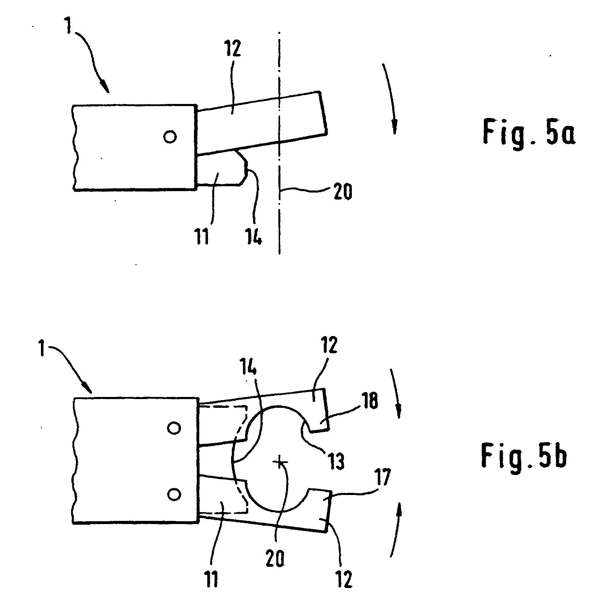

In Fig. 5b ist gezeigt, daß das erfindungsgemäße Prinzip nicht nur als Klappenprinzip (Fig. 5a, beziehungsweise Fig. 3 und 4) realisierbar ist, sondern auch mit dem Prinzip einer Zange verwirklichbar ist. Hierzu besteht das zweite Teil 12 aus zwei Elementen 17, 18, die klauen- oder zangenartig zusammenwirken. Sie sind hierzu um Drehpunkte gelenkig gelagert und mit entsprechenden Antrieben ausgestattet. In dem in Fig. 5b gezeigten Prinzip befindet sich das erste Teil 11 unterhalb der Elemente des zweiten Teiles 12. Die Achse 20 des Werkzeuges 2 ist mit einem Kreuz angedeutet, das Werkzeug 2 ist im Übrigen nicht gezeigt.

Erfindungsgemäß wird vorgeschlagen, daß das erste und zweite Teil 11, 12 zueinander relativ beweglich ist. Hierfür ist ein Antrieb vorgesehen, der zum Beispiel als hydraulischer oder pneumatischer Arbeitszylinder, der in den Greifarm 16 integriert ist, ausgebildet ist oder zum Beispiel als Elektromotor realisiert ist. Es ist so möglich, eine Fremdbetätigung als Antrieb vorzusehen, das heißt, die Bewegung des Greifers auf seinem Handhabungsgerät derart auszunützen, daß der Greifer an entsprechende Anschläge geführt wird und dann, aufgrund des Antriebes des Greifers, die Teile 11, 12 bewegt werden. Dabei kann die Fremdbetätigung auch durch den zweiten Greifer oder durch andere Elementen an der Werkzeugmaschine und so weiter erfolgen.

Des Weiteren ist vorgesehen, daß die zueinander beweglichen Teile 11, 12 oder Elemente 17, 18 des zweiten Teiles 12 zueinander fixierbar sind. Hierzu sind zum Beispiel Keilsysteme, Bolzen oder dergleichen vorgesehen, um einen sicheren Halt des Werkzeuges 2 im Greifer 1 zu erreichen. Die Fixierung kann aber auch durch entsprechend ausgebildete Arbeitszylinder und so weiter erfolgen.

Des Weiteren ist es günstig, wenn die zueinander beweglichen Teile 11, 12 beziehungsweise Elemente 17, 18 eine Zuhaltung aufweisen. Die Zuhaltung wird zum Beispiel ebenfalls durch einen hydraulisch oder pneumatisch wirkenden Arbeitszylinder bewirkt. Es können aber auch entsprechende Federn (Druck-, Zugoder Tellerfedern) vorgesehen werden, die entgegen der Wirkrichtung des Arbeitszylinders angeordnet sind. Wird der Arbeitszylinder oder der Antrieb nicht beaufschlagt, so wirkt die Kraft dieser passiven Elemente, zum Beispiel der Feder, als Zuhaltung. Im Fall, daß eine entgegengesetzte Bewegung gewünscht wird, muß der Arbeitszylinder eine entsprechend große Kraft aufwenden, um die Kraft der Zuhaltung zu überwinden.

Beim Ergreifen des Werkzeuges 2 taucht zunächst die Anlagefläche 14, 14' des ersten Teiles 11 in die Umfangsrille 22 des Werkzeugschaftes 21 ein. Anstelle der Umfangsrille ist es auch möglich, daß eine Ringnut, Rille, Vertiefung oder ein Absatz beziehungsweise eine Haltenase und so weiter an dem Werkzeug 2 und/oder auch an dem Werkzeugschaft 21 vorgesehen ist. Vorher, gleichzeitig oder hernach wird das zweite Teil klemmend an den Werkzeugschaft 21 oder das Werkzeug 2 herangeführt, wobei das zweite Teil 12 an dessen Mantelfläche angreift. Wie in Fig. 5a gezeigt, bewegt sich hierbei das zweite Teil 12 auf das erste Teil 11 zu, wobei das zweite Teil 12 hierbei eine Schwenkbewegung beschreibt, dessen Bewegung in dem spitzen Winkel oder fast parallel zur Längsachse 20 orientiert ist. Beim Lösen beziehungsweise Loslassen des Werkzeuges zum Beispiel wird der vorbeschriebene Ablauf umgedreht, wobei sich zunächst das zweite Teil 12 vom Schaft 21 beziehungsweise Werkstück 2 entfernt und die Klemmung überwindet, indem das erste Teil 11 in seinem Zusammenwirken mit dem Werkzeug 2 beziehungsweise dem Werkzeugschaft 21 ein Wiederlager hierzu bildet. Die Klemmung wird dabei in einer Bewegung in axialer Richtung überwunden, wobei die axiale Festlegung des Werkzeuges durch das erste Teil als Wiederlage ausgenützt wird.

Bei dem in Fig. 5a dargestellten Prinzip bewegt sich zwar das zweite Teil 12 abschnittsweise in Längsrichtung also parallel zur Längsachse 20, wobei aber nur ein Teil 12 des Greifers 1 bewegt wird. Der Greifer 1 im Ganzen wird seitlich, zum Beispiel im Wesentlichen rechtwinklig zur Längsachse 20 an das Werkzeug herangeführt und erlaubt daher insbesondere die vertikale Anordnung von vielen Werkzeugen übereinander. Durch die vorgeschlagene Bewegung des Teiles 12 wird erreicht, daß das Teil 12 in einen Bereich über das Werkzeug geschoben wird, in welchem der Durchmesser geringer ist, da die klauenartige Ausbildung des zweiten Teiles 12 das komplette Werkzeug umgreifen soll. Das Teil 12 wird daher so positioniert, daß es in dem schmäleren Bereich das Werkzeug übergreift und dann spitzwinklig oder im Wesentlichen parallel zur Längsachse auf den Schaft aufgeführt und klemmend daran festgelegt wird.

Auf eine vertikale Komponente beziehungsweise eine Komponente parallel zur Längsachse 20 des zweiten Teiles 12 wird bei dem Vorschlag nach 5b verzichtet, da hier eine Zangen- oder Klauenbewegung der beiden beweglich zueinander ausgestalteten Elemente 17 und 18 vorgesehen ist. Die Bewegung der Elemente 17, 18, beide gemeinsam oder jeweils nur einzeln bewegt, erfolgt hierbei in einer Ebene, die rechtwinklig ist zur Längsachse 20.

In Fig. 4 ist ein erfindungsgemäßes Umgreifsystem für das Umgreifen eines Gegenstandes zum Beispiel des Werkzeuges 2 gezeigt. Das Umgreifsystem besteht hierbei aus zwei Greifern 10, 19, die identisch aufgebaut sind. Auf die Identität der beiden Greifer kommt es bei dem Einsatz der Erfindung aber nicht an. Die beiden Greifer 10, 19 sind dabei so angeordnet, daß sie bezüglich einer Achse rechtwinklig zur Werkzeuglängsachse 20 gedreht am Werkzeug auf unterschiedlichen Seiten angreifen.

Wie in Fig. 3 ersichtlich, ist die Ausgestaltung insbesondere des ersten Teiles 11, 11' so gewählt, daß diese bei gegenüberliegenden Eingriff an dem Werkzeug einen Spalt zwischen sich bilden, das heißt, das erste Teil 11 umgreift nicht den kompletten Halbkreis des Werkzeugschaftes 21. Das zweite Teil 12, 12' jedoch übergreift aber die breiteste Stelle des Durchmesser des Werkzeuges 2 beziehungsweise Werkzeugschaftes 21, allerdings jeweil auf gegensätzlichen Seiten des Schaftes bezüglich der Rille 22. Durch die verdrehte Anordnung kollidieren die beiden Seitenteile 12, 12' nicht, da sie auf bezüglich der Rille 22 unterschiedlichen Schaftabschnitten angreifen.

## Patentansprüche

1. Greifer für das Greifen, Transportieren und/oder Übergeben eines Werkzeuges, insbesondere für den Transport eines Werkzeuges aus einem Werkzeugmagazin zu einer Arbeitsspindel, wobei das Werkzeug (2) insbesondere einen Schaft (21) aufweist und an der Mantelfläche des Schaftes oder des Werkzeuges eine Rille (22), Vertiefung, ein Absatz oder dergleichen vorgesehen ist, mit welchem ein erstes Teil (11) des Greifers (1) zusammenwirkt, wobei ein zweites Teil (12) des Greifers vorgesehen ist, das mit einem anderen, nebenliegenden Bereich des Schaftes (21) oder des Werkzeuges (2) zusammenwirkt, derart, daß das zweite Teil des Greifers (12) an der Schaftmantelfläche oder am Werkzeugaußendurchmesser anliegt und wobei das erste Teil (11) und das zweite Teil (12) des Greifers in unterschiedlichen Wirkebenen angeordnet sind und wobei das erste Teil (11) und das zweite Teil (12) relativ zueinander beweglich sind, insbesondere zueinander linear beweglich oder verschwenkbar, **dadurch gekennzeichnet, daß** das erste Teil (11) und das zweite Teil (12) des Greifers derart ausgebildet sind, daß sie bei beidseitig verdrehter Anordnung von Greifern (1) am Werkzeugschaft (21) kollisionsfrei anordenbar sind.

2. Greifer nach Anspruch 1, **dadurch gekennzeichnet, daß** das zweite Teil (12) aus mindestens zwei Elementen (17, 18) besteht, die klauenartig oder zangenartig zusammenwirken.

3. Greifer nach einem oder beiden der vorhergehenden Ansprüche, **dadurch gekennzeichnet, daß** der zweite Teil (12) mindestens zwei Anlageflächen (13, 13') aufweist und sich das Werkzeug (2) im Greifer (1) zwischen diesen Anlageflächen (13, 13') befindet und klemmend gehalten ist.

4. Greifer nach einem oder mehreren der vorhergehenden Ansprüche, **dadurch gekennzeichnet, daß** das zweite Teil (12) klauenartig ausgebildet ist und die Klaue mindestens den Halbdurchmesser des Werkzeugschaftes (21) beziehungsweise des Werkzeuges (2) übergreift.

5. Greifer nach einem oder mehreren der vorhergehenden Ansprüche, **dadurch gekennzeichnet, daß** das erste Teil (11) mindestens eine federartige Anlagefläche (14) aufweist, die in eine Umfangsrille oder -nut (22) des Werkzeugschaftes (21) oder des Werkzeuges (2) eingreift.

6. Greifer nach einem oder mehreren der vorhergehenden Ansprüche, **dadurch gekennzeichnet, daß** das erste Teil (11) relativ am Greifer (1) stillstehend und das zweite Teil (12) hierzu beweglich ausgebildet ist.

7. Greifer nach einem oder mehreren der vorhergehenden Ansprüche, **dadurch gekennzeichnet, daß** an dem Werkzeugschaft (21) Funktionalflächen (23) vorgesehen sind, die beim Ergreifen des Werkzeuges (2) durch den Greifer (1) von den Teilen und/oder Elementen nicht verdeckt und/oder berührt werden.

8. Greifer nach einem oder mehreren der vorhergehenden Ansprüche, **gekennzeichnet durch** einen hydraulischen oder pneumatischen Arbeitszylinder, einen Elektromotor oder einer Fremdbetätigung als Antrieb für die Teile beziehungsweise Elemente des Greifers.

9. Greifer nach einem oder mehreren der vorhergehenden Ansprüche, **dadurch gekennzeichnet, daß** die zueinander beweglichen Teile/Elemente zueinander fixierbar sind.

10. Greifer nach einem oder mehreren der vorhergehenden Ansprüche, **dadurch gekennzeichnet, daß** die zueinander beweglichen Teile/Elemente eine Zuhaltung aufweisen.

11. Greifer nach einem oder mehreren der vorhergehenden Ansprüche, **dadurch gekennzeichnet, daß** die Abmessung des Werkzeugschaftes (21), insbesondere der Durchmesser des Schaftes (21) größer ist, als die Abmessung beziehungsweise der Durchmesser des Werkzeuges (2) und der zweite Teil (12) beim Ergreifen/Loslassen des Werkzeuges (2) sich zumindest abschnittsweise axial oder im spitzen Winkel zur Längsachse (20) des Werkzeuges (2) bewegt/bewegen.

12. Greifer nach einem oder mehreren der vorhergehenden Ansprüche, **dadurch gekennzeichnet, daß** beim Ergreifen des Werkzeuges (2) zunächst die Anlagefläche (14, 14') des ersten Teiles (11) in die Ringnut, Rille (22), Vertiefung oder den Absatz des Werkzeuges (2) beziehungsweise des Werkzeugschaftes (21) eingreift und vorher, gleichzeitig oder hernach das zweite Teil (12) klemmend den Werkzeugschaft (21) beziehungsweise das Werkzeug (2) an dessen Mantelfläche ergreift.

13. Greifer nach einem oder mehreren der vorhergehenden Ansprüche, **dadurch gekennzeichnet, daß** beim Loslassen des Werkzeuges (2) sich das zweite Teil (12) vom Schaft (21) entfernt und die Klemmung überwindet, indem das erste Teil (11) in seinem Zusammenwirken mit dem Werkzeug (2) beziehungsweise Werkzeugschaft (21) ein Wiederlager hierzu bildet.

14. Greifer nach einem oder mehreren der vorhergehenden Ansprüche, **dadurch gekennzeichnet, daß** an dem Greifer (1), insbesondere dem ersten Teil (11) eine Lagesicherung (16) für die radiale Ausrichtung des Werkzeuges (2) vorgesehen ist.

15. Umgreifsystem für das Umgreifen eines Gegenstandes, zum Beispiel eines Werkzeuges, wobei das Umgreifsystem zwei Greifer nach einem oder mehreren der Ansprüche 1 bis 14 aufweist, wobei die Greifer bezüglich einer Achse rechtwinklig zur Werkzeuglängsachse gedreht am Werkzeug, insbesondere an gegenüberliegenden Seiten des Werkstückes angreifen.

16. Umgreifsystem nach Anspruch 15, **gekennzeichnet durch** eine kollisionsfreie Anordnung der beiden Teile (12) und (12') zu den beiden Teilen (11) und (11') mit einer Anordnung in unterschiedlichen Schaftabschnitten des Werkzeugschaftes (21) bezüglich der Rille (22).

17. Umgreifsystem nach einem oder beiden der vorhergehenden Ansprüche 15 und 16, **dadurch gekennzeichnet, daß** je das erste Teil (11, 11') der Greifer (10, 19) in die Umfangsrille (22) des Werkzeuges (2) beziehungsweise Werkzeugschaftes (21) eingreift und das zweite Teil (12, 12') auf je an einem neben der Rille (22) befindlichen Schaftabschnitt ansetzt.

18. Werkzeugmagazinsystem für eine Bearbeitungsspindel oder einen Bearbeitungskopf mit einem Greifer gemäß einem oder mehreren der Ansprüche 1 - 14, welcher aus einem Werkzeugmagazin Werkzeuge ergreift, an eine Bearbeitungsspindel, zum Beispiel ein Bearbeitungszentrum oder eine Werkzeugmaschine, führt und an die Spindel oder den Kopf übergibt, wobei der Greifer (1) bezüglich der Rotationsachse beziehungsweise Längsachse (20) des Werkzeuges (2) seitlich, insbesondere im Wesentlichen rechtwinklig zu dieser Achse an das Werkzeug (2) herangeführt wird und dieses ergreift, **dadurch gekennzeichnet, daß** unter dem Werkzeugmagazin eine Tropfwanne zum Auffangen von verschleppter Kühlflüssigkeit vorgesehen ist und die Tropfwanne mit dem Kühlflüssigkeitskreislauf verbunden ist.

19. Werkzeugmagazinsystem nach Anspruch 18, **dadurch gekennzeichnet, daß** der Greifer (1) an einem Handhabungsgerät angeordnet ist und mehrachsig, beweglich gelagert ist.

20. Werkzeugmagazinsystem nach einem oder beiden der vorhergehenden Ansprüche 18 und 19, **dadurch gekennzeichnet, daß** das Werkzeugmagazin (3) als Werkzeugregal ausgebildet ist, in welchem mindestens zwei Böden (30) im Wesentlichen übereinander angeordnet sind und die Böden (30) in entsprechenden Lagervorrichtungen (31) die Werkzeuge (2) halten.

21. Werkzeugmagazinsystem nach einem oder mehreren der vorhergehenden Ansprüche 18 bis 20, **dadurch gekennzeichnet, daß** über der Lagervorrichtung (31) ein Tropfblech (32) vorgesehen ist.

22. Werkzeugmaschine mit einem Greifer nach den vorhergehenden Ansprüchen 1 bis 14, einem Werkzeugmagazinsystem nach einem oder mehreren der vorhergehenden Ansprüchen 18 bis 20 und/oder einem Umgreifsystem nach den vorhergehenden Ansprüchen 15 bis 17.

23. Werkzeugmaschine nach Anspruch 22 für die spanabhebende Bearbeitung von Werkstücken.

## Claims

1. Gripper for grasping, conveying and/or passing on a tool, in particular for conveying a tool from a tool magazine to a work spindle, the tool (2) having in particular a shank (21) and on the surface area of the shank or the tool a groove (22), recess, a shoulder or the like being provided with which a first part (11) of the gripper (1) interacts, a second part (12) of the gripper being provided which interacts with another adjoining region of the shank (21) or the tool (2) in such a way that the second part of the gripper (12) lies against the surface area of the shank or the outer diameter of the tool, and the first part (11) and the second part (12) of the gripper being arranged in different operating levels and the first part (11) and the second part (12) being arranged movable relatively to each other, in particular linearly movable or swivelled, **characterised in that** the first part (11) and the second part (12) of the gripper are designed in such a way that they can be arranged without collision when grippers (1) are arranged twisted on both sides on the tool shank (21).

2. Gripper according to claim 1, **characterised in that** the second part (12) comprises at least two elements (17, 18) which interact claw-like or tongs-like.

3. Gripper according to one or both of the preceding claims, **characterised in that** the second part (12) has at least two contact surfaces (13, 13') and the tool (2) is located in the gripper (1) between those contact surfaces (13, 13') and is held with a clamping action.

4. Gripper according to one or more of the preceding claims, **characterised in that** the second part (12) is designed claw-like and the claw covers at least the semidiameter of the tool shank (21), respectively the tool (2).

5. Gripper according to one or more of the preceding claims **characterised in that** the first part (11) has at least one spring-like contact surface (14) which engages in a peripheral channel or groove (22) of the tool shank (21) or the tool (2).

6. Gripper according to one or more of the preceding claims, **characterised in that** the first part (11) is designed in such a way that it is stationary relative on the gripper (1) and the second part (12) is designed for movement towards it.

7. Gripper according to one or more of the preceding claims **characterised in that** on the tool shank (21) functional surfaces (23) are provided which are not covered and/or touched by the parts and/or elements when the tool (2) is grasped by the gripper (1).

8. Gripper according to one or more of the preceding claims **characterised by** a hydraulic or pneumatic operating cylinder, an electric motor or an external actuating means as a drive for the parts, respectively the elements, of the gripper.

9. Gripper according to one or more of the preceding claims, **characterised in that** the parts/elements which can be moved towards each other may be fixed to each other.

10. Gripper according to one or more of the preceding claims, **characterised in that** the parts/elements which can be moved towards each other have a locking means.

11. Gripper according to one or more of the preceding claims **characterised in that** the dimension of the tool shank (21), in particular the diameter of the shank (21), is larger than the dimension, respectively the diameter, of the tool (2) and the second part (12) moves at least section by section axially or at an acute angle to the longitudinal axis (20) of the tool (2) when it grasps/releases the tool (2).

12. Gripper according to one or more of the preceding claims, **characterised in that** in grasping the tool (2) at first the contact surface (14, 14') of the first part (11) engages into the annular groove, channel (22), recess or shoulder of the tool (2), respectively the tool shank (21), and, previously, simultaneously or subsequently the second part (12) grasps with a clamping action the surface area of the tool shank (21), respectively the tool (2).

13. Gripper according to one or more of the preceding claims, **characterised in that** on releasing the tool (2) the second part (12) moves away from the shank (21) and overcomes the clamping **in that** the first part (11) forms an abutment for that purpose in its interaction with the tool (2), respectively the tool shank (21).

14. Gripper according to one or more of the preceding claims, **characterised in that** on the gripper (1), in particular on the first part (11), a position securing device (16) is provided for the radial alignment of the tool (2).

15. Encircling system for encompassing an object, for example a tool, the encompassing system having two grippers according to one or more of the claims 1 to 14, the grippers engaging relative to an axis rectangular to the longitudinal tool axis turned at the tool, in particular on opposing sides of the work piece.

16. Encircling system according to claim 15, **characterised by** a collision-free arrangement of the two parts (12) and (12') to the two parts (11) and (11') with an arrangement in different sections of the shank of the tool shank (21) relatively to the groove (22).

17. Encircling system according to one or both of the preceding claims 15 and 16, **characterised in that** each of the first parts (11, 11') of the grippers (10, 19) engages into the peripheral groove (22) of the tool (2), respectively the tool shank (21), and the second part (12, 12') is put on the shank section located each besides the groove(22).

18. Tool magazine system for a machining spindle or a machining head with a gripper according to one or more of the claims 1 - 14, which picks up tools from a tool magazine, guides them to a machining spindle, for example of a machining center or a machine tool, and passes them to the spindle or the head, the gripper (1) being guided to the tool (2) and grasping it relative to the longitudinal axis (20) of the tool (2), laterally, in particular essentially rectangular to this axis of the tool (2), **characterised in that** under the tool magazine a drip trough for collecting dispersed cooling liquid is provided and the drip trough is connected with the cooling liquid circuit.

19. Magazine tool system according to claim 18, **characterised in that** the gripper (1) is arranged on a manipulator and mounted for multi-axial movement.

20. Tool magazine system according to one or both of the preceding claims 18 and 19, **characterised in that** the tool magazine (3) is designed as a tool rack where at least two bases (30) are essentially arranged one above the other and the bases (30) hold the tools (2) in appropriate storage devices (31).

21. Tool magazine system according to one or more of the preceding claims 18 to 20, **characterised in that** above the storage device (31) a dripping sheet (32) is provided.

22. Machine tool with a gripper according to the preceding claims 1 to 14, a tool magazine system according to one or more of the preceding claims 18 to 20 and/or an encircling system according to the preceding claims 15 to 17.

23. Machine tool according to claim 22 for the metal cutting machining of work pieces.

## Revendications

1. Grappin destiné à saisir, transporter et/ou transférer un outil, prévu plus particulièrement pour le transport d'un outil du magasin d'outils vers le porte-outil d'un outil rotatif, cet outil possédant en particulier un corps (21) ayant à sa surface une gorge (22), un creux, un rétrécissement ou quelque chose similaire, interagissant avec un premier élément (11) du grappin (1) tandis qu'un deuxième élément (12) du grappin agit sur une autre partie du corps de l'outil (21) ou sur une partie de l'outil (2) en venant au contact de la surface du corps (21) ou de la circonférence extérieure de l'outil, les deux éléments (11) et (12) du grappin situés dans deux plans de déplacement différents pouvant être rapprochés l'un de l'autre par un mouvement soit linéaire soit de pivotement, **caractérisé en ce que** le premier élément (11) et le second élément (12) du grappin (1) possèdent une configuration telle qu'ils ne rentrent pas en collision lors de l'approche du corps de l'outil et ceci, même dans le cas où ils sont tous deux complètement pivotés.

2. Grappin selon la revendication 1, **caractérisé en ce que** le deuxième élément (12) du grappin consiste en au moins deux parties (17, 18) pouvant exercer ensemble la fonction de griffes ou de pinces.

3. Grappin selon une des deux revendications précédentes voire les deux, **caractérisé en ce que** le deuxième élément (12) possède au moins deux faces d'appui (13, 13') et **en ce que** l'outil (2) est immobilisé au niveau du grappin (1) entre ces faces d'appui (13, 13') qui le maintiennent.

4. Grappin selon une ou plusieurs des revendications précédentes, **caractérisé en ce que** le deuxième élément (12) possède la forme d'une griffe, dont la longueur dépasse au moins la demi-section du corps de l'outil (21) ou de l'outil (2) lui-même.

5. Grappin selon une ou plusieurs des revendications précédentes, **caractérisé en ce que** le premier élément (11) possède au moins une face d'appui élastique (14) s'emboîtant dans une gorge de la circonférence ou dans une rainure (22) de la surface du corps de l'outil (21) ou de l'outil (2) lui-même.

6. Grappin selon une ou plusieurs des revendications précédentes, **caractérisé en ce que** le premier élément (11) est immobile par rapport au grappin (1) alors que le deuxième élément (12) est mobile.

7. Grappin selon une ou plusieurs des revendications précédentes, **caractérisé en ce que** des surfaces fonctionnelles (23) existent au niveau du corps de l'outil (21) et **en ce qu'**elles ne sont ni touchées, ni masquées par des éléments ou des parties du grappin lors de la saisie de l'outil (2) par le grappin (1).

8. Grappin selon une ou plusieurs des revendications précédentes, **caractérisé par** l'existence d'un vérin hydraulique ou pneumatique, d'un moteur électrique ou d'une force extérieure nécessaire à la commande des parties ou des éléments du grappin.

9. Grappin selon une ou plusieurs des revendications précédentes, **caractérisé en ce que** les parties ou les éléments du grappin, mobiles les uns par rapport aux autres, peuvent être immobilisés.

10. Grappin selon une ou plusieurs des revendications précédentes, **caractérisé en ce que** les parties ou les éléments du grappin, mobiles les uns par rapport aux autres, peuvent être immobilisés dans une position fermée.

11. Grappin selon une ou plusieurs des revendications précédentes, **caractérisé en ce que** la dimension du corps de l'outil (21) et en particulier le diamètre du corps de l'outil (21) est supérieur à la dimension ou au diamètre de l'outil (2) lui-même et **en ce que** le deuxième élément (12) se déplace au moins partiellement selon la direction de l'axe de l'outil ou selon une direction formant un angle aigu avec l'axe longitudinal (20) de l'outil (2) lors de son mouvement de saisie ou de relâchement.

12. Grappin selon une ou plusieurs des revendications précédentes, **caractérisé en ce qu'**en saisissant l'outil (2), les surfaces d'appui (14, 14') du premier élément (11) rentrent dans la gorge de circonférence, dans l'évidement ou dans le rétrécissement (22) de l'outil (2) ou du corps de l'outil (21) avant que, pendant que ou après que le deuxième élément (12) saisisse l'outil (2) au niveau de ses faces extérieures.

13. Grappin selon une ou plusieurs des revendications précédentes, **caractérisé en ce que** lors de la libération de l'outil (2), le deuxième élément (12) s'éloigne du corps de l'outil (21) en dépassant la force de serrage qui appuyant jusqu'à cet instant l'outil (2) ou le corps de l'outil (21) contre le premier élément (11) fonctionnant comme une butée.

14. Grappin selon une ou plusieurs des revendications précédentes, **caractérisé en ce qu'**il existe au niveau du grappin (1) et en particulier sur le premier élément (11) une sécurité (15) permettant l'ajustement radial de l'outil (2).

15. Système de repositionnement d'un objet, par exemple d'un outil, constitué de deux grappins selon une ou plusieurs des revendications 1 à 14 qui saisissent l'outil selon deux directions perpendiculaires à l'axe longitudinal de l'outil et en particulier selon deux directions opposées.

16. Système de repositionnement selon la revendication 15, **caractérisé par** une configuration sans collision des deux éléments (12) et (12') par rapport aux deux éléments (11) et (11') agissant sur deux parties différentes du corps de l'outil (21) situées de chaque côté de la gorge (22).

17. Système de repositionnement selon une des deux revendications précédentes 15 et 16 voire les deux, **caractérisé en ce que** chaque premier élément (11, 11') des grappins (10, 19) rentre dans la gorge de circonférence (22) de l'outil ou du corps de l'outil (21) et **en ce que** chaque deuxième élément (12, 12') vient en appui contre une partie différente du corps de l'outil, ces parties étant situées de part et d'autre de la gorge (22).

18. Système de magasin d'outils destiné à un porte-outil rotatif ou à une tête d'usinage, comportant un grappin selon une ou plusieurs des revendications 1 à 14 qui saisit dans un magasin d'outils un outil d'usinage, puis le transporte vers un porte-outil, par exemple celui d'un centre d'usinage ou d'une machine-outil et le transfère au porte-outil ou au mandrin en s'approchant et en saisissant l'outil (2) selon une direction latérale et en particulier approximativement perpendiculaire à l'axe de rotation ou à l'axe longitudinal (20) de l'outil (2), **caractérisé en ce qu'**une cuvette de récupération des gouttes est située sous le magasin d'outils pour récupérer le lubrifiant gouttant des outils et **en ce que** cette cuvette est connectée au circuit de lubrification.

19. Système de magasin d'outils selon la revendication 18, **caractérisé en ce que** le grappin (1) est connecté à un appareil permettant sa manuvre et **en ce qu'**il possède plusieurs axes de mobilité.

20. Système de magasin d'outils selon une des deux revendications précédentes 18 et 19 voire les deux, **caractérisé en ce que** le magasin d'outils (3) possède une configuration d'étagère supportant des outils, constituée d'au moins deux rayons (30) approximativement superposés, qui comportent des dispositifs (31) facilitant le stockage des outils (2).

21. Système de magasin d'outils selon une ou plusieurs des revendications précédentes 18 à 20, **caractérisé en ce qu'**une cuvette (32) de récupération de gouttes est située au-dessus d'un dispositif approprié (31) pour le stockage d'outils.

22. Machine d'usinage comportant un grappin selon les revendications précédentes 1 à 14, un système de magasin d'outils selon une ou plusieurs des revendications précédentes 18 à 20 et/ou un système de repositionnement selon les revendications précédentes 15 à 17.

23. Machine d'usinage selon la revendication 22 destiné à l'usinage de pièces à usiner par des outils coupants.
